# EUROPÄISCHE PATENTANMELDUNG

(11) **EP 4 230 374 A1**
(43) Veröffentlichungstag der Anmeldung: **23.08.2023**
(21) Anmeldenummer: 23151681.6
(22) Anmeldetag: 16.01.2023
(51) Int. Cl.: B29B 17/02, B29B 17/04

(54) **VERFAHREN UND ANLAGE ZUM ZERKLEINERN UND REINIGEN VON ALTKUNSTSTOFF**

(30) Priorität: 21.02.2022 DE 102022104008
(71) Anmelder: Krones AG, 93073 Neutraubling (DE)
(72) Erfinder: Forsthoevel, Jochen, 93073 Neutraubling (DE); Auburger, Michael, 93073 Neutraubling (DE); Fischer, Simon, 93073 Neutraubling (DE); Russ, Michael, 93073 Neutraubling (DE); Baur, Franz, 93073 Neutraubling (DE)
(74) Vertreter: Grünecker Patent- und Rechtsanwälte PartG mbB

(57) **Zusammenfassung**

Beschrieben werden ein Verfahren und eine Anlage zum Zerkleinern und Reinigen von Altkunststoff. Zu diesem Zweck wird Altkunststoff in einer Nassmühle zerkleinert und vorgewaschen und anschließend in einer Waschanlage insbesondere mehrstufig wertstofferhaltend gereinigt. Das daraus jeweils resultierende Abwasser wird einer mechanischen Filtration und einer Flotation unterzogen und danach als Umlaufwasser zwischengespeichert. Darauf basierend führt man einen ersten Anteil des Umlaufwassers der Nassmühle wieder als erstes Prozesswasser und einen zweiten Anteil des Umlaufwassers der Waschanlage wieder als zweites Prozesswasser zu. Dadurch lässt sich der erste und zweite Anteil des Umkehrwassers gezielt an den jeweiligen Wasserbedarf der Nassmühle und der Waschanlage sowie an die geforderten Wasserqualitäten gegebenenfalls unter selektiver Nachreinigung des zweiten Anteils des Umlaufwassers anpassen. Dadurch kann der Frischwasserbedarf für das beschriebene Verfahren minimiert werden.

## Beschreibung

Die Erfindung betrifft ein Verfahren und eine Anlage zum Zerkleinern und Reinigen von Altkunststoff.

Derartige Recycling-Verfahren und -Anlagen basieren in der Regel auf einer Zerkleinerung von Altkunststoffen in Nassmühlen mit integrierter Vorwäsche der zerkleinerten Altkunststoffe, deren anschließender Reinigung in mehrstufigen Waschanlagen und einer abschließenden Trocknung. Nassmühlen werden hierfür üblicherweise mit Frischwasser versorgt, welches als Prozesswasser zum einen der Kühlung der in den Nassmühlen verwendeten Schneid- / Mahlwerkzeugen dient, den Mahlprozess als solchen unterstützt und zudem vom Altkunststoff eingetragenen Schmutz abwäscht und aufnimmt. Auch in den zugeordneten Waschanlagen wird Frischwasser als Prozesswasser eingesetzt, um am zerkleinerten Altkunststoff oberflächlich anhaftenden Schmutz und beim Zerkleinern gegebenenfalls erzeugtes Mikroplastik aufzunehmen. Derart befrachtete Prozesswässer werden als Abwasser ausgeleitet und üblicherweise der Kanalisation zugeführt.

Die Schmutzfracht derart erzeugter Abwässer kann aber so hoch sein, dass diese nicht ohne weitere Aufbereitung in eine öffentliche Kanalisation eingeleitet werden dürfen. Als Behelf kann zwar prinzipiell Frischwasser beigemengt werden, um durch Verdünnung den jeweiligen örtlichen Anforderungen zu entsprechen. Dies verursacht jedoch einen enormen Frischwasserbedarf, der sowohl aus Kostengründen als auch zugunsten des Umweltschutzes minimiert werden sollte.

Zudem ist das Abwasser von PET-Recyclinganlagen trotz mechanischer Filterung vor Einleitung in das öffentliche Abwassernetz oft noch mit sehr kleinen Kunststoffpartikeln belastet. Es wäre daher wünschenswert, beispielsweise den (Rest-) Gehalt an Mikroplastik im erzeugten Abwasser zu minimieren.

Es besteht daher Bedarf für demgegenüber verbesserte Verfahren und Anlagen zum Zerkleinern und Reinigen von Altkunststoff, insbesondere unter Reduzierung des Frischwasserbedarfs.

Die gestellte Aufgabe wird mit einem Verfahren nach Anspruch 1 und mit einer Anlage nach Anspruch 8 gelöst. Vorteilhafte Ausführungsformen sind in den Unteransprüchen angegeben.

Das Verfahren dient demnach zum Zerkleinern und Reinigen von Altkunststoff, den man zu diesem Zweck in einer Nassmühle zerkleinert und vorwäscht sowie anschließend in einer Waschanlage insbesondere mehrstufig wertstofferhaltend reinigt. Das jeweils daraus resultierende Abwasser wird durch mechanische Filtration und Flotation behandelt und danach als Umlaufwasser zwischengespeichert. Darauf basierend führt man einen ersten Anteil des Umlaufwassers der Nassmühle wieder als erstes Prozesswasser und einen zweiten Anteil des Umlaufwassers der Waschanlage wieder als zweites Prozesswasser zu.

Auf diese Weise kann ein Wasserkreislauf / Kreisprozess bereitgestellt werden, in dem das zur Reinigung des Altkunststoffs verwendete Prozesswasser kontinuierlich vom aufgenommenen Schmutz befreit und wieder in den Zerkleinerungsprozess und Waschprozess zurückgeführt wird. Dadurch kann zum einen das durch Umweltauflagen eingeschränkte und kostenverursachende Ableiten belasteten Abwassers in eine öffentliche Kanalisation weitgehend vermieden und zum anderen der Frischwasserbedarf minimiert werden. Der vom Altkunststoff eingetragene Schmutz kann mittels in den Wasserkreislauf / Kreisprozess integrierte Abscheidesysteme in konzentrierter Form beispielsweise als entwässerter und/oder getrockneter Schlamm entfernt / abgeführt werden. Eine anschließende Entsorgung des so abgeschiedenen Schmutzes ist vergleichsweise einfach und kostengünstig.

Durch das gezielte Zuführen des ersten und zweiten Anteils des Umlaufwassers zur Nassmühle und zur Waschanlage kann die dort in den einzelnen Waschprozessen jeweils resultierende Schmutzbelastung gesteuert werden, beispielsweise um einen übermäßigen Anstieg der spezifischen Schmutzfracht in einer bestimmten Reinigungsstufe und/oder dem zugehörigen Abwasser zu vermeiden.

Die Aufbereitung des Abwassers für die Wiederverwendung als Prozesswasser in der Nassmühle und in der Waschanlage ist für die beiden Anteile des Umlaufwassers zum einen gemeinsam möglich, beispielsweise in einer ersten Aufbereitungsstufe, um dort eine Mindestwasserqualität herzustellen, die üblicherweise in der Nassmühle gefordert ist. Zum anderen ist aber auch eine getrennte Aufbereitung insbesondere für den zweiten Anteil möglich, um dessen Wasserqualität zu verbessern, was oftmals für die Wiederverwendung in der Waschanlage gefordert ist. Das zweite Prozesswasser muss beispielsweise zur Herstellung von Rezyklat für die Lebensmittelproduktion besonderes sauber sein und dann im Wesentlichen Frischwasserqualität aufweisen.

Somit ist ein insgesamt umweltschonender Anlagenbetrieb mit minimalen Ressourcenverbrauch und vergleichsweisen geringen Betriebskosten möglich.

Die Nassmühle arbeitet mit einem internen Prozesswasserkreislauf, in dem das Prozesswasser den Mahlraum der Nassmühle kontinuierlich durchströmt. Dies dient der Optimierung des Mahlergebnisses, der Kühlung der Schneid- / Mahlwerkzeuge und der Vorwäsche des Mahlguts, also des zerkleinerten Altkunststoffs. Beim beschriebenen Verfahren stellt die Nassmühle den ersten Kontakt des aufzubereitenden Altkunststoffs mit Prozesswasser her.

Der mengenmäßig größte Anteil der Verschmutzungen des Altkunststoffs und/oder erzeugten Mahlstaubs, beispielsweise als chemischer Sauerstoffbedarf und/oder Feststoffgehalt ausgedrückt, wird bereits von dem durch die Nassmühle strömenden ersten Prozesswasser aufgenommen, welches die Nassmühle danach als Abwasser verlässt. Die Schmutzfracht dieses Abwassers kann im beschriebenen Kreisprozess auf eine zur Wiederverwendung entweder als erstes Prozesswasser in der Nassmühle oder als zweites Prozesswasser in der Waschanlage jeweils zulässige Restschmutzfracht reduziert werden.

Die Waschanlage dient der wertstofferhaltenden Tiefenreinigung des erzeugten Mahlguts durch Entfernen oberflächlich anhaftender Verschmutzungen und/oder von gegebenenfalls beim Mahlen erzeugtem Mikroplastik. Das Mahlgut (der zerkleinerte Altkunststoff) liegt am Ausgang der Nassmühle in Form von sogenannten Flakes vor und durchläuft danach vorzugsweise mehrere Waschzonen / Reinigungsstufen der Waschanlage (Waschkaskade), in denen unterschiedliche Reinigungsmedien und Temperaturen angewendet werden können. Das dafür benötigte zweite Prozesswasser (Waschwasser) wird vorzugsweise in der letzten Reinigungsstufe der Waschanlage, welche zur Nachreinigung (Nachwäsche) dient, zugeführt und durchläuft dann vorgelagerte Reinigungsstufen beispielsweise zur Vorreinigung (Vorwäsche) und Hauptreinigung (Hauptwäsche) im Gegenstrom zum zerkleinerten Altkunststoff (Flakes). Anschließend wird das verschmutzte zweite Prozesswasser ebenso als Abwasser ausgeleitet.

Unter einer wertstofferhaltenden Reinigung ist zu verstehen, dass der Altkunststoff dabei weder chemisch noch thermoplastisch verändert, sondern lediglich mechanisch zerkleinert wird, beispielsweise zu sogenannten Flakes.

Das erste und das demgegenüber mit geringerer Schmutzfracht beladene zweite Prozesswasser werden als Abwässer zusammengeführt und zunächst gemeinsam aufbereitet. Diese anfängliche Wiederaufbereitung in einer ersten Aufbereitungsstufe umfasst sowohl eine mechanische Filtration beispielsweise durch einen Sandabscheider und/oder ein Feinsieb als auch eine nachfolgende Flotationsbehandlung vorzugsweise mittels Entspannungsflotation.

Das daraus resultierende Umlaufwasser erfüllt in der Regel stets die Anforderungen an das erste Prozesswasser zur Wiederverwendung in der Nassmühle. Je nach Art und Menge des vom Altkunststoff eingetragenen Schmutzes und je nach Verwendungszweck des herzustellenden Rezyklats kann die Qualität des so aufbereiteten Umlaufwassers prinzipiell ohne Nachreinigung für eine Wiederverwendung als zweites Prozesswasser in der Waschanlage geeignet sein.

Die mechanische Filtration kann beispielsweise auf dem Prinzip eines Zyklons oder einer Zentrifuge beruhen und wird vorzugsweise durch ein Feinsieb ergänzt, um Sand und anderweitige Feststoffe aus dem Abwasser abzutrennen.

Mit der Flotation können suspendierte Inhaltsstoffe, wie beispielsweise Öl oder Feststoffe, aus dem Abwasser entfernt werden, vorzugsweise nach dem Prinzip der Entspannungsflotation.

Nach der Flotation ist der chemische Sauerstoffbedarf (CSB) des Effluents, also des Umlaufwassers, beispielsweise um 60 bis 80 % gegenüber dem zugeführten Abwasser reduziert, der Feststoffgehalt beispielsweise um mindestens 95 % und/oder der Gehalt an Fetten, Ölen und Schmierstoffen um wenigstens 95 %. Nach Dekantieren des bei der Flotation erzeugten Schlamms lässt sich dessen Feststoffgehalt beispielsweise durch Zentrifugieren des Schlamms und/oder Pressen des Schlamms in einer Schneckenpresse auf bis zu 30% erhöhen, insbesondere auf 20-30%. Der Flotationsstufe ist daher vorzugsweise eine Zentrifuge zugeordnet. Folglich kann der damit entwässerte Schlamm auf effiziente Weise separat entsorgt werden.

Vorzugsweise reinigt man den zweiten Anteil des Umlaufwassers durch eine Kombination von biologischem Abbau und Membranfiltration oder durch eine Elektrokoagulation nach. Biologischer Abbau und Membranfiltration erfolgen bekanntermaßen in einem sogenannten Membranbioreaktor und dienen dazu, organische Bestandteile des Abwassers und anorganische Nährstoffe, beispielsweise Stickstoffverbindungen, aus dem Abwasser zu entfernen und in einen bioaktiven Schlamm umzuwandeln. Die Membranfiltration erfolgt dabei vorzugsweise separat in Form einer Ultrafiltration, um den chemischen Sauerstoffbedarf, den biochemischen Sauerstoffbedarf, den Stickstoffgehalt und den Gehalt an Mikroplastik effektiv zu reduzieren.

Somit lässt sich die Qualität des zweiten Anteils des Umlaufwassers gezielt an die diesbezüglich höheren Anforderungen für die Verwendung als zweites Prozesswasser in der Waschanlage anpassen, im Vergleich zu den diesbezüglich geringeren Qualitätsanforderungen für die Verwendung des ersten Anteils des Umlaufwassers als erstes Prozesswasser in der Nassmühle.

Eine Kombination von biologischem Abbau und Membranfiltration dient somit in erster Linie einer Reduzierung des chemischen Sauerstoffbedarfs, wenn das Abwasser vergleichsweise stark mit Öl verschmutzt ist. Ersatzweise kann eine Elektrokoagulation eingesetzt werden, insbesondere sofern in der Waschanlage keine Qualitätsanforderungen zur Herstellung von Rezyklat für die Anwendung im Lebensmittelbereich gestellt werden.

Bei einer weiteren günstigen Ausführungsform reinigt man den zweiten Anteil des Umlaufwassers ferner durch Umkehrosmose insbesondere auf eine zur Lebensmittelverarbeitung geeignete Wasserqualität nach. Durch Umkehrosmose lässt sich die Wasserqualität maximieren, wodurch sich allerdings die danach verbleibende Menge des zweiten Anteils des Umlaufwassers um bis zu einem Drittel reduziert. Durch die Umkehrosmose lässt sich der chemische Sauerstoffbedarf sowie der Stickstoff- und Phosphorgehalt des zweiten Anteils des Umlaufwassers minimieren, um im Wesentlichen Frischwasserqualität zur erzielen.

Vorzugsweise stellt man den ersten Anteil des Umlaufwassers auf wenigstens das Doppelte des zweiten Anteils ein, insbesondere auf das Dreifache bis Sechsfache. Damit lässt sich der jeweilige Bedarf an erstem Prozesswasser und zweitem Prozesswasser für die meisten Anwendungsfälle und Prozessbedingungen abdecken. Ferner können die gegebenenfalls vorhandenen Aufbereitungsstufen zur Nachreinigung des zweiten Anteils des Umlaufwassers auf wirtschaftliche Weise ausgelastet und betrieben werden.

Bei einer weiteren günstigen Ausführungsform führt man der Waschanlage zusätzlich zum zweiten Prozesswasser externes Frischwasser zu und stellt dabei das Verhältnis aus dem zugeführten zweiten Prozesswasser und dem externen Frischwasser auf wenigstens 1 und insbesondere 1,5 bis 5 ein. Damit lassen sich durch die Aufbereitung des zweiten Anteils des Umlaufwassers sowie durch Verdampfung in der Waschanlage oder dergleichen erzeugte Wasserverluste ausgleichen, ohne die Qualität des zweiten Prozesswassers zu verschlechtern.

Bei einer weiteren günstigen Ausführungsform wird der chemische Sauerstoffbedarf (CSB) im zweiten Anteil des Umlaufwassers durch die Nachreinigung gegenüber dem ersten Anteil des Umlaufwassers wenigstens halbiert, vorzugsweise auf höchstens ein Drittel reduziert. Vorzugsweise beträgt der chemische Sauerstoffbedarf im zweiten Anteil dann nur noch höchstens 1000 mg/l. Beispielsweise beträgt der chemische Sauerstoffbedarf (CSB) im ersten Anteil des Umlaufwassers 2000 bis 4000 mg/l und wird demgegenüber im zweiten Anteil durch die Nachreinigung auf 1000 bis 2000 mg/l oder weniger reduziert. Dadurch lässt sich die Wasserqualität des ersten und zweiten Prozesswassers auf die jeweiligen Anforderungen in der Nassmühle und in der Waschanlage für die meisten Anwendungsfälle gezielt und hinsichtlich eines wirtschaftlichen Anlagenbetriebs einstellen.

Bei dem beschriebenen Verfahren setzt man in der Nassmühle vorzugsweise dort vorhandene Schneid- / Mahlwerkzeuge und den damit zerkleinerten Altkunststoff so dem ersten Prozesswasser aus, dass dieses dabei einen Anteil der am Altkunststoff vorhandenen Schmutzfracht aufnimmt, insbesondere deren Hauptanteil, und danach insbesondere vollständig als Abwasser der mechanischen Filtration und Flotation zugeführt wird. Dadurch wird eine effektive Vorwäsche des Altkunststoffs bereitgestellt, so dass in der nachfolgenden Waschanlage nur noch oberflächlich anhaftende Restverschmutzungen entfernt werden müssen.

Der Hauptanteil der an dem Altkunststoff vorhandenen Schmutzfracht lässt sich beispielsweise dadurch quantifizieren, dass wenigstens 50 % des durch den Altkunststoff eingetragenen chemischen Sauerstoffbedarfs und/oder des Feststoffgehalts (pro zugeführter Volumeneinheit des ersten Prozesswassers) in das Abwasser der Nassmühle übergeht und somit nicht in die Waschanlage eingetragen wird.

Bei einer günstigen Ausführungsform behandelt man einen dritten Anteil des wenigstens durch Filtration und Flotation / Dekantieren mechanisch gereinigten Umlaufwassers chemisch und/oder enzymatisch, um dadurch im Umlaufwasser enthaltene Kleinstpartikel aus Kunststoff abzubauen, leitet den dritten Anteil als Abwasser aus, insbesondere infolge Abwasserabscheidung bei einer Membranfiltration, Elektrokoagulation und/oder Umkehrosmose des zweiten Anteils des Umlaufwassers. Dadurch lässt sich die Beladung des aus dem Verfahren / der Vorrichtung auszuleitenden Abwassers mit Mikroplastik reduzieren.

Der beschriebene enzymatische und/oder chemische Abbau von Kunststoff-Kleinstpartikeln, beispielsweise von PET-Kleinstpartikeln bis zu 200 µm Teilchengröße, basiert beispielsweise auf einer biokatalytischen Depolymerisation des Kunststoffs, insbesondere PET, mittels mikrobieller Polyester-Dehydrolasen oder dergleichen Enzyme.

Die beschriebene Recycling-Anlage dient zum Zerkleinern und Reinigen von Altkunststoff und umfasst zu diesem Zweck: eine Nassmühle zum Zerkleinern und Vorwaschen des Altkunststoffs; eine insbesondere mehrstufige Waschanlage zum anschließenden wertstofferhaltenden Reinigen des zerkleinerten Altkunststoffs; eine mechanische Filtrationsstufe und eine Flotationsstufe zum Aufbereiten von Abwasser der Nassmühle und der Waschanlage zu Umlaufwasser; einen Puffertank zum Zwischenspeichern des Umlaufwassers; und jeweils daran angeschlossen zum einen ersten Umlaufkreis zum Zurückführen eines ersten Anteils des Umlaufwassers zur Nassmühle zur dortigen Verwendung als erstes Prozesswasser und zum anderen einen zweiten Umlaufkreis zum Zurückführen eines zweiten Anteils des Umlaufwassers zur Waschanlage zur dortigen Verwendung als zweites Prozesswasser. Damit lassen sich die bezüglich des Anspruchs 1 beschriebenen Vorteile erzielen.

Vorzugsweise umfasst der zweite Umlaufkreis einen Membranbioreaktor oder eine Elektrokoagulations-Stufe und insbesondere ferner eine jeweils nachgeschaltete Umkehrosmose-Stufe. Damit lässt sich die Wasserqualität je nach Anforderung an das zweite Prozesswasser in der Waschanlage, beispielsweise zur Herstellung von Kunststoff-Rezyklat für die Lebensmittelindustrie, gezielt anpassen, wie bezüglich des Verfahrens beschrieben ist.

Vorzugsweise sind die Umlaufkreise derart an den Puffertank angeschlossen und zum Fördern des Umlaufwassers ausgebildet, dass dessen erster Anteil wenigstens doppelt so groß eingestellt werden kann wie dessen zweiter Anteil, insbesondere wenigstens dreimal bis sechsmal so groß. Hierfür sind beispielsweise separat steuerbare Pumpen im ersten und zweiten Umlaufkreis vorhanden.

Vorzugsweise umfasst der Membranbioreaktor eine aerobe biologische Abbaustufe und eine separate Ultrafiltrationsstufe.

Vorzugsweise umfasst die mechanische Filtrationsstufe einen Sandabscheider, ein Feinsieb und/oder einen Tank für gefiltertes Abwasser. Der Sandabscheider kann beispielsweise als Zyklon oder anderweitig nach dem Prinzip einer Gravitationsabscheidung arbeiten. Das Feinsieb hat beispielsweise eine Maschenweite von höchstens 200 µm. Der Tank für das gefilterte Abwasser kann beispielsweise dazu verwendet werden, das Abwasser vor der Flotationsstufe durch Zugabe von CO₂ und/oder Säure zu neutralisieren. Ebenso ist darin eine Volumenpufferung zum optimalen Betrieb der Flotationsstufe möglich.

Bei einer weiteren günstigen Ausführungsform umfasst die beschriebene Anlage ferner einen Regenwassertank zum Auffangen und Beimischen von Regenwasser zum Abwasser der Nassmühle und Waschanlage und/oder zum Umlaufwasser. Dadurch lässt sich der Bedarf für die Zufuhr externen Frischwassers aus einem Leitungsnetz unter Einhaltung einer entsprechend guten Wasserqualität reduzieren.

Die Waschanlage umfasst beispielsweise wenigstens drei Reinigungsstufen zur Vorreinigung, Hauptreinigung und Nachreinigung sowie einen internen Prozesswasserkreis, um das zweite Prozesswasser darin im Gegenstrom zum zerkleinerten Altkunststoff durch die Reinigungsstufe zu führen. Damit lässt sich die im zweiten Umlaufkreis erzeugte Wasserqualität optimal zur stufenweisen Reinigung des Mahlguts (zerkleinerten Altkunststoffs) nutzen.

Die Nassmühle umfasst beispielsweise einen Mahlraum mit Mahl-/ Schneidwerkzeugen zum Zerkleinern des Altkunststoffs unter Beimengung des ersten Prozesswassers und eine Vorwaschstufe zum Vorwaschen des Mahlguts (zerkleinerten Altkunststoffs) mit dem ersten Prozesswasser, um im ersten Prozesswasser Schmutz vom Altkunststoff aufzunehmen und das erste Prozesswasser danach insbesondere im Wesentlichen vollständig als Abwasser auszuleiten. Dies ermöglicht eine effiziente Zerkleinerung des Altkunststoffs und dessen ebenso effiziente Vorwäsche. Die Vorwaschstufe kann in den Mahlraum der Nassmühle integriert sein.

Vorzugsweise umfasst die Anlage ferner eine Abwasserreinigungsstufe zum chemischen und/oder enzymatischen Abbau von im Umlaufwasser enthaltenen Kleinstpartikeln aus Kunststoff und zum anteiligen Ausleiten derart gereinigten Umlaufwassers als Abwasser, das insbesondere durch zusätzliche Membranfiltration, Elektrokoagulation und/oder Umkehrosmose aus dem zweiten Anteil des Umlaufwassers abgeschieden wird. Dadurch kann die Beladung des auszuleitenden Abwassers mit Mikroplastik reduziert werden.

Eine bevorzugte Ausführungsform der Erfindung ist zeichnerisch dargestellt. Die einzige Figur zeigt ein Fließschema der beschriebenen Anlage gemäß einer bevorzugten Ausführungsform.

Wie die Figur erkennen lässt, umfasst die Anlage 1 zum Zerkleinern und Reinigen von Altkunststoff 2 eine Nassmühle 3 zum Zerkleinern und Vorwaschen des Altkunststoffs 2 und eine vorzugsweise mehrstufige Waschanlage 4 zum anschließenden wertstofferhaltenden Reinigen des zerkleinerten Altkunststoffs 2.1 (Mahlguts). Die Waschanlage 4 umfasst demnach beispielsweise eine erste Reinigungsstufe 4a zur Vorreinigung, eine zweite Reinigungsstufe 4b zur Hauptreinigung und eine dritte Reinigungsstufe 4c zur Nachreinigung des in der Nassmühle 3 zerkleinerten und vorgewaschenen Altkunststoffs 2.1 (Mahlguts).

Die Anlage 1 umfasst zudem wenigstens eine mechanische Filtrationsstufe 5 und eine Flotationsstufe 6 zum Aufbereiten von erstem Abwasser 7 der Nassmühle 3 und von zweitem Abwasser 8 der Waschanlage 4 jeweils zu einem in der Anlage 1 zumindest anteilig wiederverwendbaren Umlaufwasser 9.

Die Anlage 1 umfasst zudem einen Puffertank 10 zum Zwischenspeichern des Umlaufwassers 9 und ausgangsseitig jeweils daran angeschlossen einen ersten Umlaufkreis 11 zum Zurückführen eines ersten Anteils 9a des Umlaufwassers 9 zur Nassmühle 3 und einen zweiten Umlaufkreis 12 zum Zurückführen eines zweiten Anteils 9b des Umlaufwassers 9 zur Waschanlage 4.

Der erste Anteil 9a des Umlaufwassers 9 wird in der Nassmühle 3 als erstes Prozesswasser 13, der zweite Anteil 9b des Umlaufwassers 9 in der Waschanlage 4 als zweites Prozesswasser 14 wiederverwendet.

Das erste Prozesswasser 13 dient in der Nassmühle 3 dazu, deren Schneid- / Mahlwerkzeuge (nicht dargestellt) zu kühlen und die Zerkleinerung des zugeführten Altkunststoffs 2 beispielsweise zur Minimierung von Mahlstaub zu unterstützen. Ferner dient das erste Prozesswasser 13 dazu, einen Anteil der durch den Altkunststoff 2 eingetragenen Schmutzfracht aufzunehmen, insbesondere den Hauptanteil der Schmutzfracht, beispielsweise quantifiziert in Form des chemischen Sauerstoffbedarfs (CSB) und/oder des Feststoffgehalts, bezogen auf die vom Altkunststoff 2 insgesamt eingetragene Schmutzfracht.

Das erste Prozesswasser 13 wird zu diesem Zweck in einem schematisch angedeuteten Prozesswasserkreis durch die Nassmühle 3 geleitet und mit der aufgenommenen Schmutzfracht als erstes Abwasser 7 ausgeleitet und der mechanischen Filtrationsstufe 5 zugeführt.

Das zweite Prozesswasser 14 wird in der Waschanlage 4 vorzugsweise im Gegenstrom zum zerkleinerten Altkunststoff 2.1 (Mahlgut) geführt. Das zweite Prozesswasser 14 wird hierfür zuerst der dritten Reinigungsstufe 4c (Nachreinigung) zugeführt, fließt dann durch die zweite Reinigungsstufe 4b (Hauptreinigung) und schließlich durch die erste Reinigungsstufe 4a (Vorreinigung). Dabei nimmt das zweite Prozesswasser sukzessive eine Schmutzfracht auf und wird schließlich als zweites Abwasser 8 ausgeleitet und der mechanischen Filtrationsstufe 5 zugeführt.

Je nach erforderlicher Qualität des zweiten Prozesswassers 14 umfasst der zweite Umlaufkreis 12 zur Nachreinigung optional einen Membranbioreaktor 15 oder eine Elektrokoagulations-Stufe 16, um damit den chemischen Sauerstoffbedarf, Festkörpergehalt und/oder Gehalt an Fetten, Ölen und dergleichen Schmierstoffen im zweiten Anteil 9b des Umlaufwassers 9 zu reduzieren.

Im Membranbioreaktor 15 werden auf prinzipiell bekannte Weise organische Bestandteile des Umlaufwassers 9 und enthaltene anorganische Nährstoffe, wie Stickstoff- und Phosphorverbindungen, durch vorzugsweise aeroben biologischen Abbau in einem Tank 15a in Biomasse (Schlamm) umgewandelt. Zusätzlich ist im Membranbioreaktor 15 vorzugsweise eine separate Ultrafiltrationsstufe 15b vorgesehen, um beispielsweise Mikroplastik zu entfernen und/oder den chemischen Sauerstoffbedarf, den biochemischen Sauerstoffbedarf und/oder den Stickstoffgehalt im zweiten Anteil 9b des Umlaufwassers 9 besonders effektiv zu reduzieren.

Anstelle des Membranbioreaktors 15 kann eine Elektrokoagulations-Stufe 16 insbesondere dann zum Einsatz kommen, wenn die Anforderungen an die Qualität des zweiten Prozesswassers 14 geringer sind und/oder das Umlaufwasser 9 nur einen vergleichsweise geringen Gehalt an Ölen, Fetten und dergleichen Schmierstoffen aufweist.

Wird für das zweite Prozesswasser 14 eine besonders hohe Qualität / Reinheit benötigt, beispielsweise zum Waschen von zerkleinerten Altkunststoff 2.1 für eine spätere Wiederverwendung im Bereich der Lebensmittelproduktion, so kann der zweite Umlaufkreis 12 ferner eine optionale und dem Membranbioreaktor 15 bzw. der Elektrokoagulations-Stufe 16 nachgeschaltete Umkehrosmose-Stufe 17 umfassen. Damit lässt sich im Wesentlichen Frischwasserqualität im zweiten Anteil 9b des Umlaufwassers 9 erzielen.

Um die Volumenströme des zur Nassmühle 3 zurückgeförderten ersten Anteils 9a des Umlaufwassers 9 und des zur Waschanlage 4 zurückgeförderten zweiten Anteils 9b des Umlaufwassers 9 einzustellen, umfasst der erste Umlaufkreis 11 eine erste Pumpe 18 und der zweite Umlaufkreis 12 eine zweite Pumpe 19. Hierfür können die Pumpen 18, 19 mit wenigstens einer elektronischen Steuereinheit (nicht dargestellt) unabhängig voneinander gesteuert / geregelt werden.

Der erste Anteil 9a (insbesondere dessen Volumenstrom) wird auf diese Weise vorzugsweise wenigstens doppelt, insbesondere wenigstens dreimal bis sechsmal, so groß eingestellt wie der zweite Anteil 9b (insbesondere dessen Volumenstrom).

Gegebenenfalls sind noch zusätzliche Stellorgane und/oder Pumpen (nicht dargestellt) in den Umlaufkreisen 11, 12 vorhanden, um die Volumenströme des ersten und zweiten Anteils 9a, 9b des Umlaufwassers 9 einzustellen und/oder dieses zwischen und in den einzelnen beschriebenen Aufbereitungsstufen auf prinzipiell bekannte Weise zu fördern.

Der Waschanlage 4 wird vorzugsweise ferner Frischwasser 20 zugeführt, um Wasserverluste in der Nassmühle 3 und/oder in der Waschanlage 4 und/oder bei der beschriebenen Aufbereitung der Abwässer 7, 8 und/oder der Nachreinigung des Umlaufwassers 9 auszugleichen. Derartige Wasserverluste können beispielsweise durch Verdampfen oder durch den Auftrag von Restfeuchte in den einzelnen Aufbereitungsstufen verursacht werden.

Der Bedarf an Frischwasser 20 der Anlage 1 insgesamt kann jedoch gegenüber herkömmlichen Anlagen zum Zerkleinern und Reinigen von Altkunststoff 2 deutlich reduziert werden. Demnach kann das Verhältnis aus dem der Waschanlage 4 zugeführten zweiten Anteil des Umlaufwassers 9 und des externen Frischwassers auf mindestens 1 und insbesondere 1,5 bis 5 eingestellt werden.

Die Nassmühle 3 kann ausschließlich mit dem ersten Anteil 9a des Umlaufwassers 9 versorgt werden, um das darin benötigte erste Prozesswasser 13 ohne externe Frischwasserzufuhr bereitzustellen. Demgegenüber kann sich das zweite Prozesswasser 14 in der Waschanlage 4 aus dem zugeführten zweiten Anteil 9b des Umlaufwassers 9 und dem extern zugeführten Frischwasser 20 zusammensetzen.

Der chemische Sauerstoffbedarf im ersten Anteil des Umlaufwassers 9 kann beispielsweise 2 bis 4 g/l betragen, ohne die Verwendung des Umlaufwassers 9 als erstes Prozesswasser 13 in der Nassmühle 3 einzuschränken. Demgegenüber wird der chemische Sauerstoffbedarf im zweiten Anteil 9b des Umlaufwassers 9 durch die Nachreinigung wenigstens im Membranbioreaktor 15 oder der stattdessen vorhandenen Elektrokoagulations-Stufe 16 vorzugsweise wenigstens halbiert, also beispielsweise auf weniger als 1 bis 2 g/l reduziert, um die oftmals höheren Qualitätsanforderungen beim Reinigen des zerkleinerten Altkunststoffs 2.1 in der Waschanlage 4 zu erfüllen.

In der Figur ist ferner ein Abwassertank 21 schematisch angedeutet, der zwischen der mechanischen Filtrationsstufe 5 und der Flotationsstufe 6 angeordnet ist und beispielsweise zum volumetrischen Puffern der zu reinigen Abwässer 7, 8 und zum Einstellen eines geeigneten pH-Werts für die anschließende Flotationsbehandlung dienen kann.

Schematisch angedeutet ist ferner, dass die mechanische Filtrationsstufe 5 beispielsweise eine mechanische Filtrationseinheit 5a, die beispielsweise nach dem Prinzip eines Zyklons arbeitet, umfassen kann sowie ein Feinsieb 5b, das beispielsweise eine Maschenweite von höchstens 200 µm aufweist.

Ferner ist angedeutet, dass die Flotationsstufe 6 einen Dekanter 22 vorzugsweise mit einer Zentrifuge und/oder Schneckenpresse umfasst, welche jeweils den in der Flotationsstufe 6 dekantierten Schlamm 23 entwässert, so dass dieser anschließend separat entsorgt werden kann.

In entsprechender Weise ist schematisch angedeutet, dass Schlamm 23 ebenso aus dem Membranbioreaktor 15 abgeführt wird, ebenso darin anfallendes Abwasser 24. Auch in der optional vorhandenen Umkehrosmose-Stufe 17 wird im laufenden Betrieb Abwasser 24 erzeugt und schließlich ausgeleitet.

Schematisch angedeutet ist in der Figur zudem, dass in der mechanischen Filtrationsstufe 5 Sand 25 und weitere Feststoffe 26 abgesondert und ausgeleitet werden.

Der Vollständigkeit halber ist ferner angedeutet, dass der in der Waschanlage 4 gereinigte Altkunststoff 2.2 (fertig gewaschenes Mahlgut) abschließend in einem Trockner 27 getrocknet und dann als Rezyklat 2.3 des beschriebenen Verfahrens zur weiteren Verarbeitung beispielsweise für eine Extrusion zu Pellets bereitgestellt wird.

Die Anlage 1 kann zudem einen Regenwassertank 28 umfassen, um Regenwasser dem Abwasser 7, 8 und/oder dem Umlaufwasser 9 beizumengen, gegebenenfalls auch dessen Anteilen 9a, 9b separat. Damit lässt sich der Frischwasserbedarf zusätzlich minimieren.

Mit der beschriebenen Anlage 1 kann beispielsweise wie folgt gearbeitet werden.

Die zur Zerkleinerung des Altkunststoffs 2 verwendete Nassmühle 3 wird kontinuierlich mit dem in Form des ersten Anteils 9a des Umlaufwassers 9 bereitgestellten ersten Prozesswasser 13 durchströmt. Dadurch wird ein interner Prozesswasserkreislauf in der Nassmühle 3 bereitgestellt, der den überwiegenden Anteil, also wenigstens 50%, der vom Altkunststoff 9 eingetragenen Verschmutzungen aufnimmt. Das daraus resultierende erste Abwasser 7 wird gemeinsam mit dem aus der Waschanlage 4 stammenden zweiten Abwasser 8 durch die mechanische Filtrationsstufe 5 mit der mechanischen Filtrationseinheit 5a und dem Feinsieb 5b geleitet, wodurch Sand 25 und weitere Feststoffe 26 ausgetragen werden.

Anschließend wird das derart mechanisch gereinigte Abwasser 7, 8 dem Abwassertank 21 zugeführt und dort zwischengespeichert und beispielsweise neutralisiert. Von dort wird das behandelte Abwasser 7, 8 der Flotationsstufe 6 zugeführt, in welcher verbliebene Schmutzpartikel mit Hilfe von Flockungsmitteln auf prinzipiell bekannte Weise gebunden und abgetrennt werden. Der dabei anfallende Schlamm 23 wird nach Dekantieren zentrifugiert und/oder gepresst, dadurch entwässert und schließlich separat entsorgt.

Das erste und zweite Abwasser 7, 8 werden somit in einer von der mechanischen Filtrationsstufe 5 und der Flotationsstufe 6 gebildeten und für das Verfahren obligatorischen ersten Aufbereitungsstufe zum Umlaufwasser 9 aufbereitet und dann im Puffertank 10 zwischengespeichert.

Ausgehend davon wird das Umlaufwasser 9 in Form eines ersten Teilstroms in den ersten Anteil 9a zur Wiederverwendung in der Nassmühle 3 und in Form eines zweiten Teilstroms in den zweiten Anteil 9b zur Wiederverwendung in der Waschanlage 4 aufgeteilt. Diese Teilströme werden beispielsweise mittels der separat gesteuerten Pumpen 18, 19 eingestellt und im Anlagenbetrieb vorzugsweise an den jeweiligen Bedarf in der Nassmühle 3 für das erste Prozesswasser 13 und in der Waschanlage 4 für das zweite Prozesswasser 14 laufend angepasst.

Der zweite Anteil 9b des Umlaufwassers 9 wird je nach erforderlicher Wasserqualität vorzugsweise in einer zweiten Aufbereitungsstufe, die entweder von einem Membranbioreaktor 15 oder einer Elektrokoagulations-Stufe 16 gebildet wird, nachgereinigt. Der dabei anfallende Schlamm 23 kann wiederum auf prinzipiell bekannte Weise entwässert und separat entsorgt werden.

Optional wird der zweite Anteil 9b des Umlaufwassers je nach erforderlicher Wasserqualität in einer dritten Aufbereitungsstufe in Form einer Umkehrosmose-Stufe 17 zusätzlich nachgereinigt, insbesondere auf Frischwasserqualität.

Der zweite Anteil 9b des Umlaufwassers 9 wird somit wenigstens in der ersten Aufbereitungsstufe mit ihrer mechanischen Filtrationsstufe 5 und Flotationsstufe 6 gereinigt, optional ferner in der vom Membranbioreaktor 15 oder der Elektrokoagulationsstufe 16 gebildeten zweiten Aufbereitungsstufe und dann gegebenenfalls zusätzlich in der von der Umkehrosmose-Stufe 17 gebildeten dritten Aufbereitungsstufe. Für den ersten Anteil 9a des Umlaufwassers 9 genügt dagegen in der Regel eine Reinigung in der ersten Aufbereitungsstufe.

Die Umlaufkreise 11, 12 schließen somit separat steuerbare und behandelbare Wasserkreisläufe zur Versorgung der Nassmühle 3 und der Waschanlage 4. In den Wasserkreisläufen durch den ausgetragenen Schlamm 23, Verdampfung und Restfeuchte des gereinigten Altkunststoffs 2 verursachte Wasserverluste werden durch Zugabe externen Frischwassers 20 ausgeglichen.

Dieser zusätzliche Frischwasserbedarf ist gegenüber herkömmlichen Anlagen zur Zerkleinerung und Reinigung von Altkunststoffen 2 ebenso reduziert wie der Verschmutzungsgrad und die Menge des zu entsorgenden Abwassers, so dass das beschriebene Verfahren und die beschriebene Vorrichtung 1 eine besonders umweltschonende und wirtschaftliche Wiederaufbereitung von Altkunststoffen 2 ermöglichen. Hierfür können die optionale zweite und dritte Aufbereitungsstufe je nach erforderlicher Qualität des zweiten Prozesswassers 14 und/oder je nach zu erzielender Abwasserqualität integriert werden. Dies kann sich beispielsweise nach der geplanten Wiederverwendung des Rezyklats 2.3 richten, wie für die Produktion von Lebensmitteln, und/oder nach den jeweiligen Entsorgungskosten für Abwässer 24.

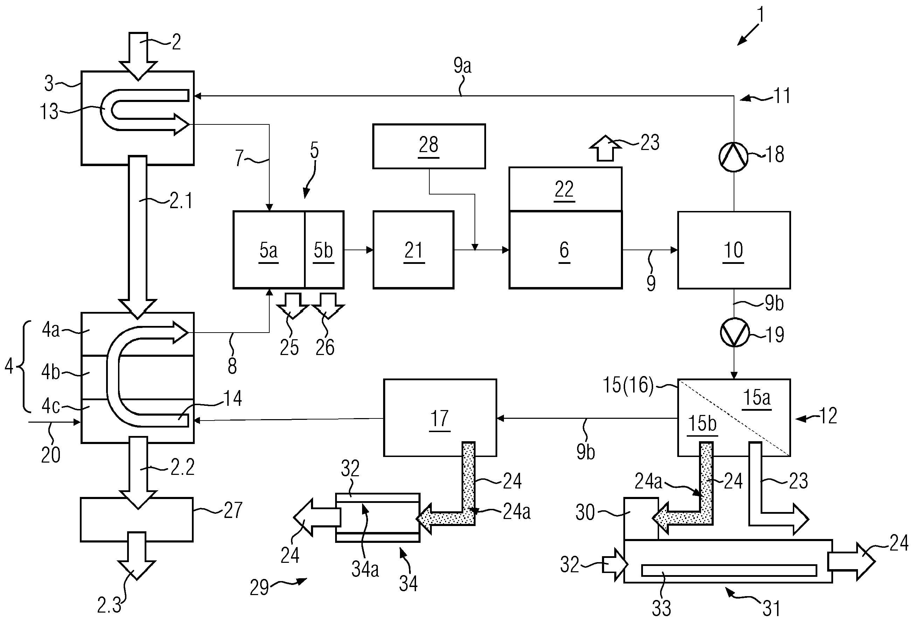

In der Figur 1 ist ferner eine optionale Abwasserreinigungsstufe 29 zur chemischen und/oder enzymatischen Reinigung des aus der Anlage 1 bzw. dem Verfahren auszuleitenden Abwassers 24 angedeutet. Demnach wird das mechanisch in der Filtrationsstufe 5 und im Dekanter 22 der Flotationsstufe 6 gereinigte Abwasser 7, 8 der Nassmühle 3 und der Waschanlage 4, also das daraus resultierende Umlaufwasser 9, zusätzlich enzymatisch und/oder chemisch behandelt, um die Beladung des Abwassers 24 mit Kleinstpartikeln 24a aus Kunststoff, insbesondere aus PET, zu reduzieren. Hierzu werden die Kleinstpartikel 24a beispielsweise mittels mikrobieller Polyester-Dehydrolasen biokatalytisch depolymerisiert. Dies ist besonders effektiv, wenn die Kleinstpartikel 24a eine maximale Teilchengröße von 200 µm aufweisen. Somit lässt sich die Beladung des Abwassers 24 mit sogenanntem Mikroplastik effizient reduzieren.

Je nach Ausbaustufe der Anlage 1 ist diese chemische und/oder enzymatische Abwasserreinigung prinzipiell an beliebiger Stelle stromabwärts der mechanischen Filtrationsstufe 5 und der Flotationsstufe 6 möglich, beispielsweise im ersten und/oder zweiten Umlaufkreis 11, 12, insbesondere im Abwasserablauf des Membranbioreaktors 15 bzw. der Elektrokoagulationsstufe 16 und/oder der Umkehrosmose-Stufe 17.

Ein enzymatischer und/oder chemischer Abbau von Kunststoff, insbesondere PET, im Sinne einer Depolymerisation ist nach mechanischer Vorreinigung, beispielsweise nach Filtrierung mit Maschenweiten von höchstens 200 µm, besonders effizient, da die danach (beispielsweise im Filtrat) verbleibenden Kleinstpartikel 24a relativ kurze Diffusionswege für enzymatische / chemische Reaktionen ermöglichen und relativ große spezifische Oberflächen aufweisen.

Die zugehörige mechanische Vorreinigung des auszuleitenden Abwassers 24 ist beispielsweise mittels der beschriebenen mechanische Filtrationsstufe 5 und/oder Flotationsstufe 6 bzw. des Dekanters 22 möglich.

Eine zusätzliche mechanische Vorreinigungsstufe 30 für das Abwasser 24 ist aber prinzipiell ebenso denkbar, beispielsweise jeweils im Abwasserablauf nach Sedimentation, Flotation, Filtration und/oder Elektrokoagulation. Anschließender chemischer / enzymatischer Abbau der verbliebenen Kleinstpartikel 24a ist dann beispielsweise in einem (schematisch angedeuteten) Nachklärbecken 31 möglich.

Hierfür kann ein enzymatischer Katalysator 32, je nach Reaktionssystem, dem Abwasser 24 zugegeben oder auch immobilisiert auf einem später wieder abzutrennenden Träger 33 bereitgestellt werden. Denkbar ist auch ein vom Abwasser 24 durchströmter Reaktor 34, auf dessen Funktionsoberfläche 34a der enzymatische Katalysator 32 immobilisiert aufgebracht ist.

Diese unterschiedlichen Varianten der Abwasserreinigungsstufe 29 sind der Übersichtlichkeit halber nebeneinander dargestellt und lediglich beispielhaft dem Membranbioreaktor 15 bzw. der Elektrokoagulationsstufe 16 und der Umkehrosmose-Stufe 17 zugeordnet. Beispielsweise könnte die Vorreinigungsstufe 30 je nach Qualität des Umlaufwassers 9 entfallen und/oder auch nur das Nachklärbecken 31 oder der Reaktor 34 vorhanden sein.

Die beschriebene chemische und/oder enzymatische Reinigung des Abwassers 24 kann als kontinuierlicher Prozess oder als diskontinuierlicher Prozess (Batchprozess) in der Abwasserreinigungsstufe 29 durchgeführt werden.

Um die Reaktionsgeschwindigkeit zu optimieren, kann das Abwasser 24 auf ein für die jeweilige chemische / enzymatische Reaktion bzw. für den Katalysator 32 optimales Temperaturniveau erwärmt werden. Hierfür könnte Abwärme aus dem beschriebenen Recyclingprozess genutzt werden.

Alternativ oder zusätzlich kann die für die chemische / enzymatische Abwasserreinigung jeweils verfügbare Reaktionszeit durch geeignete Verweilzeit des Abwassers 24 im Nachklärbecken 31 oder dergleichen Nachreaktionsbecken vergrößert werden. Dieses könnte beispielsweise auch mit einem Absetzbecken kombiniert werden. Es könnte auch der eventuell je nach Katalysatorsystem weiter fortschreitende enzymatische Abbau im dort erzeugten Absetzschlamm genutzt werden.

Je nach enzymatischem Katalysatorsystem kann der Katalysator 32 immobilisiert in der Abwasserreinigungsstufe 29 verbleiben, nach der chemischen / enzymatischen Reaktion abgetrennt und wiederaufbereitet werden, nach der jeweiligen Reaktion abgetrennt und entsorgt werden oder auch (bei entsprechender Unbedenklichkeit) gemeinsam mit dem Abwasser 24 entsorgt werden.

Mit der Abwasserreinigungsstufe 29 lässt sich die Beladung des auszuleitenden Abwassers 24 mit Mikroplastik in Kombination mit der beschriebenen mechanischen Vorreinigung (Filtrieren, Dekantieren) besonders effizient minimieren.

## Patentansprüche

1. Verfahren zum Zerkleinern und Reinigen von Altkunststoff (2), wobei man diesen in einer Nassmühle (3) zerkleinert und vorwäscht und anschließend in einer Waschanlage (4) insbesondere mehrstufig wertstofferhaltend reinigt, wobei man das daraus jeweils resultierende Abwasser (7, 8) einer mechanischen Filtration und einer Flotation unterzieht und danach als Umlaufwasser (9) zwischenspeichert, und wobei man dann einen ersten Anteil (9a) des Umlaufwassers der Nassmühle wieder als erstes Prozesswasser (13) und einen zweiten Anteil (9b) des Umlaufwassers der Waschanlage wieder als zweites Prozesswasser (14) zuführt.

2. Verfahren nach Anspruch 1, wobei man den zweiten Anteil (9b) des Umlaufwassers (9) durch eine Kombination von biologischem Abbau und Membranfiltration oder durch Elektrokoagulation nachreinigt.

3. Verfahren nach Anspruch 2, wobei man den zweiten Anteil (9b) des Umlaufwassers (9) ferner durch Umkehrosmose insbesondere auf eine zur Lebensmittelverarbeitung geeignete Qualität nachreinigt.

4. Verfahren nach einem der vorigen Ansprüche, wobei man den ersten Anteil (9a) des Umlaufwassers (9) auf wenigstens das Doppelte des zweiten Anteils (9b) einstellt, insbesondere auf das Dreifache bis Sechsfache.

5. Verfahren nach wenigstens einem der vorigen Ansprüche, wobei man der Waschanlage (4) ferner externes Frischwasser (20) zuführt und das Verhältnis aus dem zugeführten zweiten Prozesswasser (14) und dem externen Frischwasser auf wenigstens 1 und insbesondere 1,5 bis 5 einstellt.

6. Verfahren nach wenigstens einem der vorigen Ansprüche, wobei der chemische Sauerstoffbedarf (CSB) im zweiten Anteil (9b) des Umlaufwassers (9) durch die Nachreinigung gegenüber dem ersten Anteil (9a) des Umlaufwassers (9) wenigstens halbiert wird, insbesondere von 2 g/l bis 4 g/l auf höchstens 1 g/l.

7. Verfahren nach wenigstens einem der vorigen Ansprüche, wobei man in der Nassmühle (3) Schneid-/ Mahlwerkzeuge und den damit zerkleinerten Altkunststoff (2.1) dem ersten Prozesswasser (13) aussetzt, dieses dabei einen Anteil der am Altkunststoff (2) vorhandenen Schmutzfracht, insbesondere deren Hauptanteil, aufnimmt und danach insbesondere vollständig als Abwasser (7) der mechanischen Filtration und Flotation zugeführt wird.

8. Verfahren nach wenigstens einem der vorigen Ansprüche, wobei man das durch Filtration sowie Flotation und Dekantieren mechanisch gereinigte Umlaufwasser (9) anteilig chemisch und/oder enzymatisch behandelt, um dadurch im Umlaufwasser (9) enthaltene Kleinstpartikel (24a) aus Kunststoff abzubauen, und als Abwasser (24) ausleitet, insbesondere infolge einer Abscheidung bei Membranfiltration, Elektrokoagulation und/oder Umkehrosmose des zweiten Anteils (9b) des Umlaufwassers (9).

9. Anlage (1) zum Zerkleinern und Reinigen von Altkunststoff (2), umfassend: eine Nassmühle (3) zum Zerkleinern und Vorwaschen des Altkunststoffs; eine insbesondere mehrstufige Waschanlage (4) zum anschließenden wertstofferhaltenden Reinigen des zerkleinerten Altkunststoffs (2.1); eine mechanische Filtrationsstufe (5) und eine Flotationsstufe (6) zum Aufbereiten von Abwasser (7, 8) der Nassmühle und der Waschanlage zu Umlaufwasser (9); einen Puffertank (10) zum Zwischenspeichern des Umlaufwassers; und jeweils daran angeschlossen einen ersten Umlaufkreis (11) zum Zurückführen eines ersten Anteils (9a) des Umlaufwassers zur Nassmühle zur dortigen Verwendung als erstes Prozesswasser (13) und einen zweiten Umlaufkreis (12) zum Zurückführen eines zweiten Anteils (9b) des Umlaufwassers zur Waschanlage zur dortigen Verwendung als zweites Prozesswasser (14).

10. Anlage nach Anspruch 9, wobei der zweite Umlaufkreis (12) einen Membranbioreaktor (15) oder eine Elektrokoagulations-Stufe (16) und insbesondere ferner eine jeweils nachgeschaltete Umkehrosmose-Stufe (17) umfasst.

11. Anlage nach Anspruch 9 oder 10, wobei die Umlaufkreise (11, 12) derart an den Puffertank (12) angeschlossen und zum Fördern des Umlaufwassers (9) ausgebildet sind, dass dessen erster Anteil (9a) wenigstens doppelt so groß eingestellt werden kann wie dessen zweiter Anteil (9b), insbesondere wenigstens dreimal bis sechsmal so groß.

12. Anlage nach einem der Ansprüche 9 bis 11, wobei der Membranbioreaktor (15) eine aerobe biologische Abbaustufe (15a) und eine separate Ultrafiltrationsstufe (15b) umfasst.

13. Anlage nach wenigstens einem der Ansprüche 9 bis 12, wobei die mechanische Filtrationsstufe (5) einen Sandabscheider (5a) und ein Feinsieb (5b) umfasst und/oder einem Tank (21) für gefiltertes Abwasser vorgeschaltet ist.

14. Anlage nach wenigstens einem der Ansprüche 9 bis 13, ferner mit einem Regenwassertank (28) zum Auffangen und Beimischen von Regenwasser zum Abwasser (7, 8) und/oder Umlaufwasser (9).

15. Anlage nach wenigstens einem der Ansprüche 9 bis 14, wobei die Waschanlage (4) wenigstens drei Reinigungsstufen (4a, 4b, 4c) zur Vorreinigung, Hauptreinigung und Nachreinigung sowie einen internen Prozesswasserkreis umfasst, um das zweite Prozesswasser (14) darin im Gegenstrom zum zerkleinerten Altkunststoff (2.1) durch die Reinigungsstufen zu führen.

16. Anlage nach wenigstens einem der Ansprüche 9 bis 15, wobei die Nassmühle (3) einen Mahlraum mit Schneidwerkzeugen zum Zerkleinern des Altkunstoffs (2) unter Beimengung des ersten Prozesswassers (13) und eine Vorwaschstufe zum Vorwaschen des zerkleinerten Altkunststoffs (2.1) mit dem ersten Prozesswasser umfasst, um im ersten Prozesswasser eine Schmutzfracht des Altkunststoffs aufzunehmen und das erste Prozesswasser dann insbesondere im Wesentlichen vollständig als Abwasser (7) auszuleiten.

17. Anlage nach wenigstens einem der Ansprüche 9 bis 16, ferner mit einer Abwasserreinigungsstufe (29) zum chemischen und/oder enzymatischen Abbau von im Umlaufwasser (9) enthaltenen Kleinstpartikeln (24a) aus Kunststoff und zum anteiligen Ausleiten derart gereinigten Umlaufwassers (9) als Abwasser (24), das insbesondere durch zusätzliche Membranfiltration, Elektrokoagulation und/oder Umkehrosmose aus dem zweiten Anteil (9b) des Umlaufwassers (9) abgeschieden wird.
